# EUROPEAN PATENT APPLICATION

(11) **EP 2 916 494 A1**
(43) Date of publication of application: **09.09.2015**
(21) Application number: 14158412.8
(22) Date of filing: 07.03.2014
(51) Int. Cl.: H04L 12/58, H04L 29/06, H04L 9/14, H04L 9/08

(54) **Encapsulated key controllable encryption**

(71) Applicant: Conseal Security Ltd, Medstead, Hampshire GU34 5JE (GB)
(72) Inventor: Colvin, Thomas David, Medstead, Hampshire GU34 5JE (GB); Middleton, Timothy James, Medstead, Hampshire GU34 5JE (GB)
(74) Representative: Whitlock, Holly Elizabeth Ann

(57) **Abstract**

There is described an encryption system which encrypts plaintext using a main encryption key K_{MAIN} to generate ciphertext, and generates a message key MKᵢ for each intended reader. The message key MKᵢ is formed by encrypting the main encryption key K_{MAIN} in combination with identity data representative of the reader using an intermediate encryption key IKᵢ for each reader is asymmetrically encrypted using a public key PUBᵢ for the reader to form a server key SKᵢ for each intended reader of the ciphertext, and the server key SKᵢ for each intended reader is sent to a secure database server for storage together with an access rule specifying conditions for supplying the server key SKᵢ. Knowledge of both the message key MKᵢ and the server key SKᵢ and a private key PRIᵢ of an asymmetric encryption system for the recipient is required to recover the main encryption key K_{MAIN}. The access rule allow the encrypter to retain some measure of control over the opening of the ciphertext. In an embodiment, the access rules can be changed after the set of server keys SKᵢ have been sent to the secure database server 5.

## Description

This invention relates to an electronic data security system and components of the electronic data communication system. The invention has particular, but not exclusive, relevance to a system for sending mail messages to and receiving mail messages from a person electronically.

Electronic mail messaging systems are now well known. Further, the ability to encrypt electronic mail messages in case of illicit interception is also well known. Two types of encryption exist; symmetric encryption and asymmetric encryption.

In symmetric encryption, the same cryptographic key is used for encrypting plaintext to produce ciphertext and for decrypting the ciphertext to recover the original plaintext. This makes symmetric encryption well suited to applications in which the same person or entity is performing the encryption and decryption operations. However, if the decryption operation is performed by a different person or entity to the encryption operation, then the cryptographic key needs to be securely shared between the two different people or entities involved.

In contrast, asymmetric encryption uses different cryptographic keys for encrypting plaintext to produce ciphertext and for decrypting ciphertext to recover plaintext. This makes asymmetric encryption well suited to applications in which information is shared between two or more users, as the recipient need not share the key used to decrypt the information with the sender of the information.

After the sender has sent an encrypted message, encryption systems rely upon the cryptographic key being used to decrypt information remaining confidential. If a malicious user manages to obtain the cryptographic key for decryption, then the malicious user is able to decrypt messages without the knowledge of the intended recipient of the message. To address this problem, various schemes have been proposed employing key management servers that store cryptographic keys and make the cryptographic keys available to authorised recipients only after some sort of identity check. Key management servers are, however, a natural target within the cryptographic system because they store cryptographic keys for decryption. Accordingly, key management servers require high levels of security.

Some other systems propose cloud-based storage of protected data on a central server. This is, however, inherently less secure as the protected data itself is vulnerable, not just cryptographic keys.

The present invention provides an electronic data security system, appropriately referred to as Encapsulated Key Controllable Encryption, which allows the generator of encrypted data to retain a measure of control over who is able to access the encrypted data. The electronic data security system utilises a secure database server that advantageously stores neither the cryptographic key for decryption nor the protected message.

According to an aspect of the present invention, there is provided a method of encrypting plaintext data, the method comprising: symmetrically encrypting the plaintext data using a main encryption key to generate ciphertext data; for each intended reader of the electronic data, encrypting the main encryption key in combination with identity data representative of the reader using an intermediate encryption key for the reader to generate encrypted key data; for each intended reader, asymmetrically encrypting the intermediate encryption key for the reader using the public key for the reader as the cryptographic key for a PKI encryption algorithm to form encrypted intermediate key data; and storing the encrypted intermediate key data in a server in conjunction with access rules for controlling access to the encrypted intermediate key. The ciphertext data and the encrypted key data for all intended readers is then either sent as an electronic mail message to all intended readers, or is stored in data memory for subsequent access by the intended readers.

According to another aspect of the present invention, there is provided a method of decrypting a ciphertext data by a reader, the ciphertext data being stored in conjunction with encrypted key data for each intended reader of the ciphertext data, the method comprising: retrieving encrypted intermediate key data corresponding to the reader from a server; asymmetrically decrypting the retrieved encrypted intermediate key data using the private key for the reader as the cryptographic key for a PKI encryption algorithm to recover an intermediate key; decrypting the encrypted key data for each intended reader using the recovered intermediate key to identify identity data representative of the reader and a corresponding main encryption key; and decrypting the ciphertext data using said corresponding main encryption key.

According to a further aspect of the invention, there is provided a method of operation of a network server, the method comprising: receiving a message conveying encrypted intermediate key data associated with a ciphertext for each intended reader of the ciphertext and an associated access rule the encrypted intermediate key data for each intended reader; storing the encrypted intermediate key data in association with each corresponding intended reader in a database; receiving a request for encrypted intermediate key data for an intended reader of a ciphertext; checking compliance with the access rule; and in response to compliance to the access rule, sending a message conveying the encrypted intermediate key data for the intended reader.

In an embodiment, the present invention provides a mechanism that allows the generator of the ciphertext, or someone having rights over the generator of the ciphertext such as a system administrator, to alter the access rules. This can allow, for example, the access rules for a ciphertext to be amended to deny access to one or more intended readers, the access rules for all ciphertexts for an intended reader to be amended to deny access to the intended reader, and to provide a mechanism whereby a ciphertext can be automatically wiped from the local data memory of an intended reader.

The ability to alter access rules after initial access rules have been set to access encrypted intermediate key data has applicability outside of the aspects of the invention discussed above. For example, this functionality could be used when a single intermediate encryption key is used for a plurality of intended readers of a ciphertext.

Various embodiments of the invention will now be described, by way of example, with reference to the accompanying drawings in which:
Figure 1 schematically shows the main components of an electronic mail messaging according to the invention;
Figure 2 schematically show the main components of a secure database server forming part of the electronic mail messaging system illustrated in Figure 1;
Figure 3 schematically shows the main components of a network device of a user of the electronic mail messaging system illustrated in Figure 1;
Figures 4A to 4C show a flow chart illustrating operations performed when a sender sends an encrypted electronic mail message to a recipient;
Figure 5 is a flow chart showing in more detail a sub-process for recovering a cryptographic key; and
Figure 6 is a flow chart illustrating operations performed when a recipient is removed from the electronic mail messaging system.

### System Overview

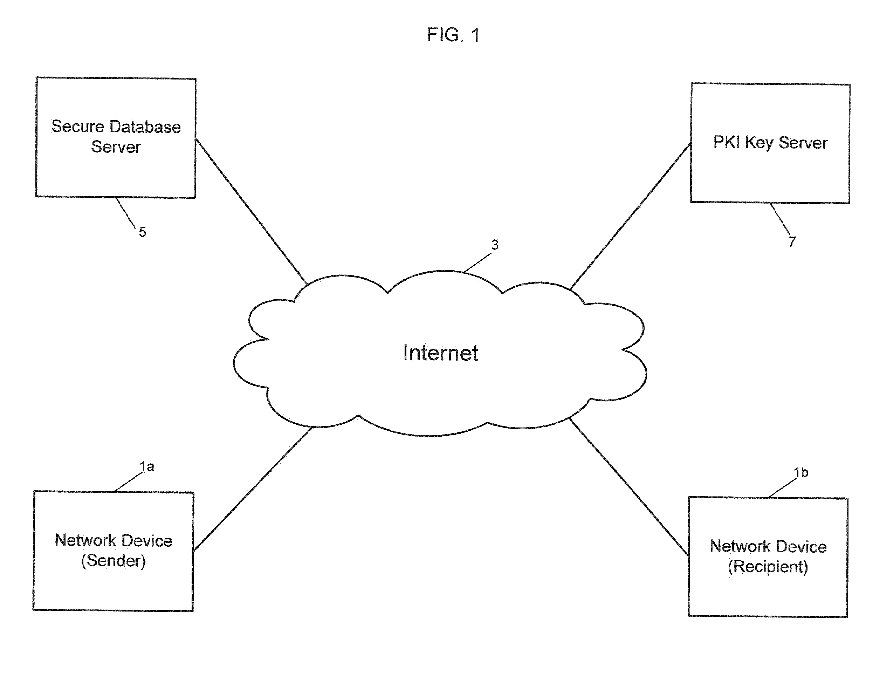

As shown in Figure 1, a first network device 1a is connected to a second network device 1b via the Internet 3. The network devices 1a, 1b are also connected to a secure database server 5 and a Public Key Infrastructure (PKI) server 7 via the Internet 3. For purposes of explanation, the first network device 1a will hereafter be associated with a sender of an electronic mail message and the second network device will be associated with a recipient of that electronic mail message. It will be appreciated that many other network devices are interconnected via the Internet, and the electronic mail message may be directed to several recipients.

According to the invention, when sending an encrypted electronic mail message, the network device 1a encrypts the plaintext message using a main encryption key K_{MAIN} to generate a ciphertext message, and transmits the cipher text message to the recipients along with a message key MKᵢ for each recipient. In addition, the network device transmits a server key SKᵢ for each recipient of the encrypted electronic mail message to the secure database server 5 for storage. As will be discussed in more detail hereafter, neither knowledge of the message key MKᵢ alone nor knowledge of the server key SKᵢ alone nor knowledge of both the message key MKᵢ and the server key SKᵢ is sufficient to recover the main encryption key K_{MAIN}. What is required to recover the main encryption key K_{MAIN} is knowledge of both the message key MKᵢ and the server key SKᵢ and a private key PRIᵢ of an asymmetric encryption system for the recipient.

By retaining some of the information required to recover the main encryption key K_{MAIN} in the secure database server 5, the sender of the encrypted electronic mail message retains some measure of control over the opening of the encrypted electronic mail message. In an embodiment, the set of server keys is sent to the secure database server 5 together with data indicating access rules for providing each server key SKᵢ to a respective recipient. These access rules may be based on, for example, one or more of time (e.g. the recipient is only able to access the server key SKᵢ for a limited period of time), network information (e.g. the server key SKᵢ can only be transmitted to particular IP addresses), and device information (e.g. the server key SKᵢ cannot be transmitted to a Smartphone).

Embodiments of the present invention allow additionally for the access rules to be changed after the set of server keys SKᵢ have been sent to the secure database server 5. In particular, the sender of the encrypted electronic mail message, or an administrator having administration rights over the sender of the encrypted electronic mail message, can send a message to the secure database server 5 conveying data indicating changes to the access rules. For example, as described in more detail hereafter, a recipient may be deleted from the encrypted electronic mail message.

The main components of the secure database server 5 and the user network devices 1 will now be described in more detail.

### The Secure Database Server

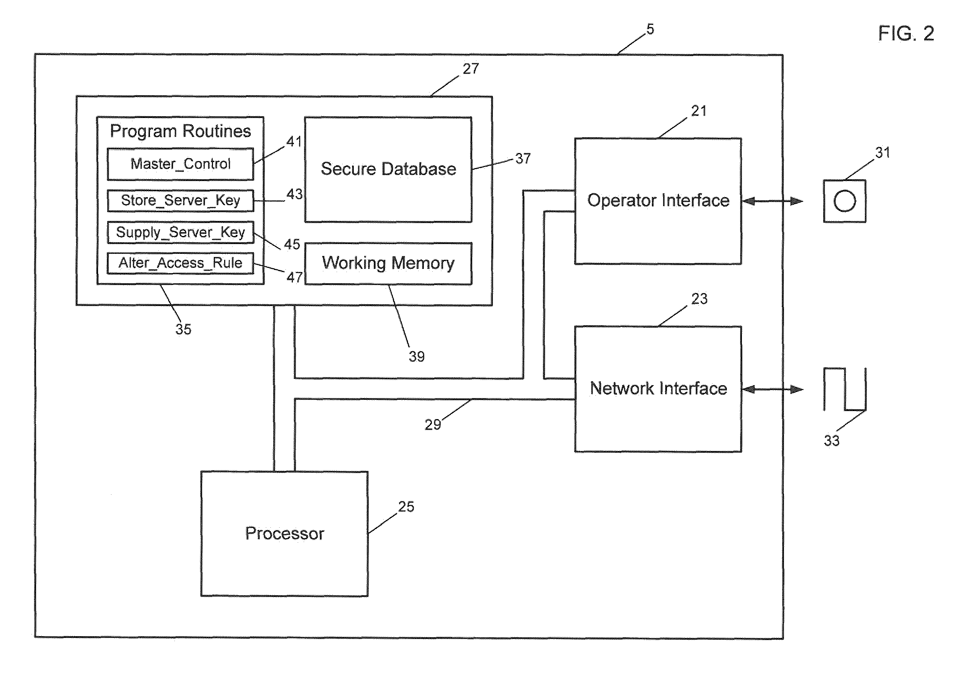

As shown in Figure 2, the secure database server 5 has an operator interface 21, a network interface 23, a processor 25 and a memory 27 interconnected by a bus system 29.

The operator interface 21 includes a keyboard (not shown) for an operator to enter data into the secure database server 5 and a display (not shown) for allowing the operator to read data produced by the secure database server 5. The operator interface 21 also includes a CD_ROM reader-writer (not shown) via which data stored on a CD-ROM 31 can be input into the secure database server 5 or data produced by the secure database server 5 can be written onto a recordable CD-ROM 31.

The network interface 23 receives data from, and outputs data to, the Internet 3 in the form of network signals 33.

The processor 25 performs processing operations in accordance with program routines stored in the memory 27. These program routines can be stored during manufacture, or input to the secure database server 5 via the operator interface 21 or the network interface 23. The program routines process data stored in the memory 27 and data received by the secure database server 5 via the operator interface 21 and the network interface 23.

In a conventional manner, the memory 27 is formed by different types of memory having respectively different access times, and conventional processing techniques are employed to improve the speed of processing by caching data likely to be required into fast access time memory in advance. The memory 27 includes a region 35 storing program routines used by the secure database server 5, a region 37 storing the secure database and a region 39 providing working memory.

In particular, in this embodiment, the program routines memory region 35 stores:
- a Master_Control routine 41;
- a Store_Server_Key sub-routine 43;
- a Supply_Server_Key subroutine 45; and
- an Alter_Access_Rule subroutine 47.

The Master_Control routine 41 controls the operation of the secure database server 5, using the sub-routines as needed.

In this embodiment, the secure key database 37 is a relational database having fields for users, message identifiers, server keys and access rules. In this way, for each message there can be associated a plurality of users, with a server key and one or more access rules being associated with each of those users for that message.

### User Network Devices

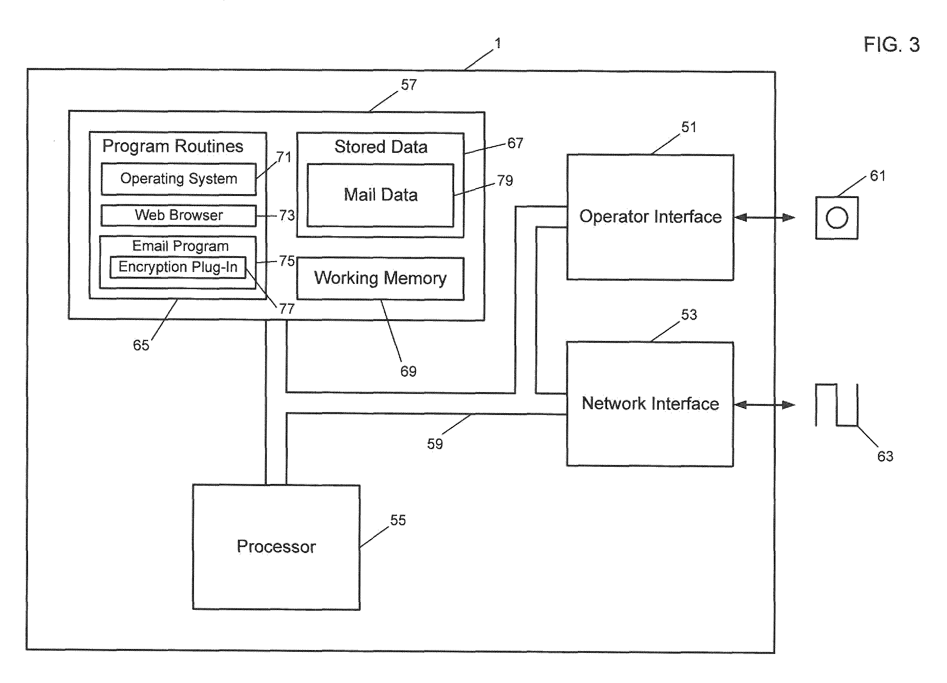

As shown in Figure 3, a network device 1 has an operator interface 51, a network interface 53, a processor 55 and a memory 57 interconnected by a bus system 59.

The operator interface 51 includes a keyboard (not shown) for an operator to enter data into the network device 1 and a display (not shown) for allowing the operator to read data produced by the network device 1. The operator interface 51 also includes a CD_ROM reader-writer (not shown) via which data stored on a CD-ROM 61 can be input into the network device 1 or data produced by the network device 1 can be written onto a recordable CD-ROM 61.

The network interface 53 receives data from, and outputs data to, the Internet 3 in the form of network signals 63.

The processor 55 performs processing operations in accordance with program routines stored in the memory 57. These program routines can be stored during manufacture, or input to the network device 1 via the operator interface 51 or the network interface 53. The program routines process data stored in the memory 57 and data received by the network device 1 via the operator interface 51 and the network interface 53.

In a conventional manner, the memory 57 is formed by different types of memory having respectively different access times, and conventional processing techniques are employed to improve the speed of processing by caching data likely to be required into fast access time memory in advance. The memory 57 includes a region 65 storing program routines used by the network device 1, a region 67 storing data used by the network device 1 and a region 69 providing working memory.

In particular, in this embodiment, the program routines stored in the program routines memory region 65 include:
- an Operating System 71;
- a Web Browser 73; and
- an Email Program 75.

The Operating System 71 is a conventional operating system (such as Microsoft Windows) and controls operation of the network device 1. The Web Browser 73 is also a conventional web browser (such as Microsoft Internet Explorer). In this embodiment, the Email Program 75 is a conventional email program (such as Microsoft Outlook) having a novel encryption plug-in 77 according to the invention.

The data stored in the data memory region 67 includes mail data 79 storing mail messages.

### Sending/Reading Encrypted Electronic Messages

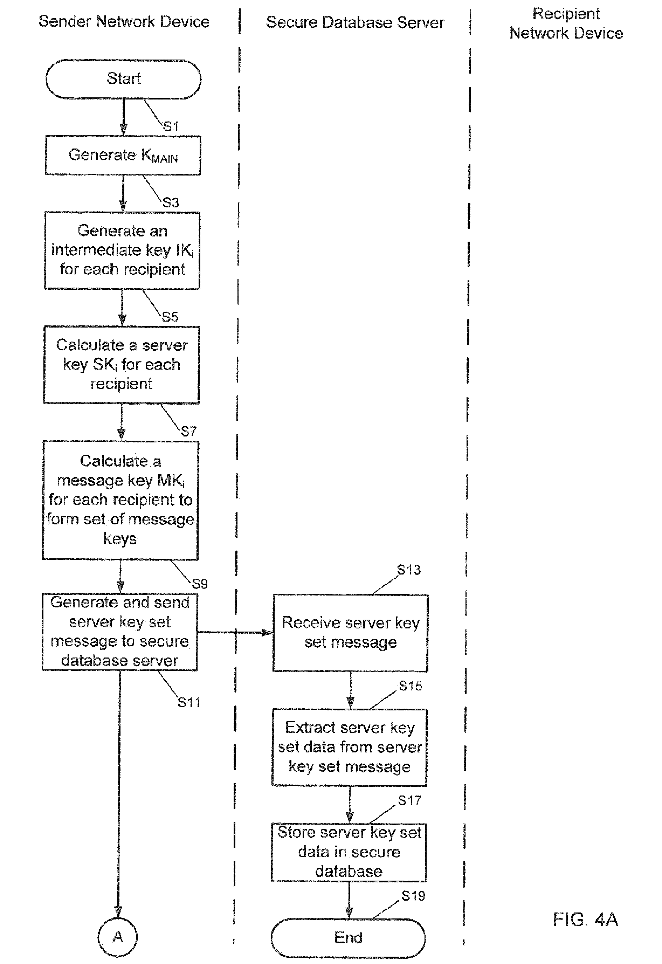

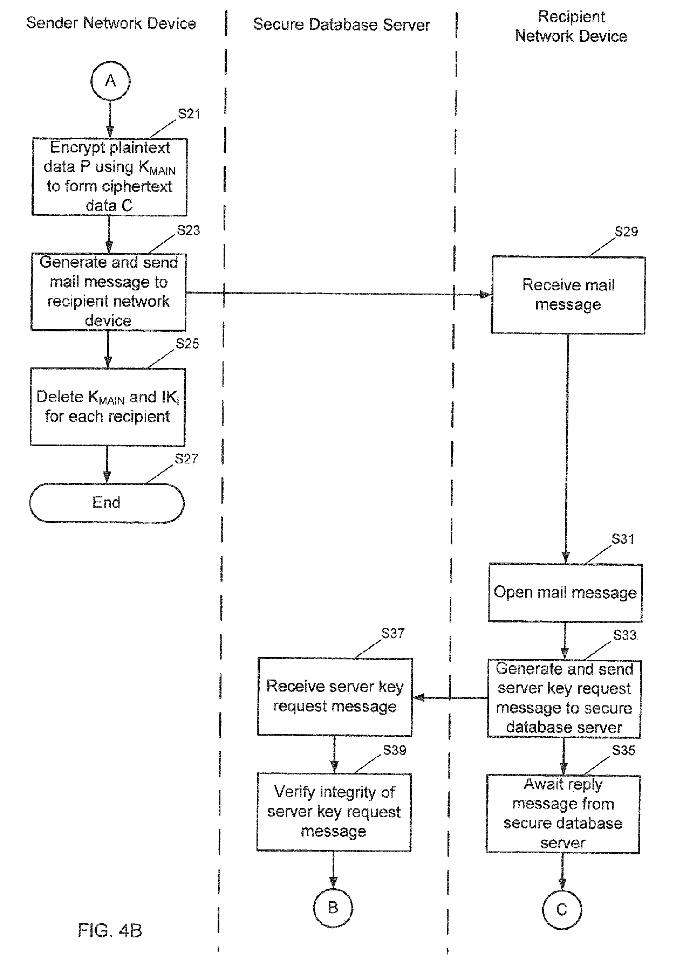

The sending and reading of an encrypted electronic mail message will now be described with reference to Figures 4A to 4C.

The user of the sender network device 1a prepares a message in plaintext (i.e. in unencrypted form) using the email program 75. Although the term plaintext is used in conformity with conventional cryptographic terminology, it will be appreciated that the plaintext generally corresponds to a sequence of binary data that may represent a passage of text, an image, video data, sound data or the like. The user of the sender network device also enters a set R of n recipients {R₁...Rᵢ...Rₙ} for the plaintext message P.

The encryption plug-in 77 provides the option for the plaintext message P to be sent in encrypted form. In particular, in this embodiment a button is presented to the user of the email program 75 for encrypting the plaintext message P to form a ciphertext message C and sending the ciphertext message C. The process of Figures 4A to 4C starts, at S1, with the pressing of that button.

Program code associated with the encryption plug-in 77 (for ease of explanation simply referred to as the encryption plug-in 77 hereafter) generates, at S3, a main cryptographic key K_{MAIN} using a random number generator. In this embodiment, K_{MAIN} is a 256 bit binary number. The encryption plug-in 77 also generates, at S5, an intermediate key IKᵢ for each recipient Rᵢ to form a set IK of n intermediate keys {IKᵢ...IKᵢ...Ikₙ}. In this embodiment, each intermediate key IKᵢ is also a 256 bit binary number.

The encryption plug-in 77 then calculates, at S7, a server key SKᵢ for each recipient Rᵢ to form a set SK of n server keys {SK₁...SKᵢ...SKₙ}. In particular, for each recipient Ri the encryption plug-in 77 retrieves a corresponding public key PUBᵢ for an asymmetric encryption algorithm and then calculates the server key SKᵢ for the recipient Rᵢ by asymmetrically encrypting the intermediate key IKᵢ corresponding to the recipient Rᵢ using the public key PUBᵢ for the recipient Rᵢ. It will be appreciated that the public key PUBᵢ for recipient Rᵢ can be retrieved either from local memory or, if it is not stored in local memory, from a remote network device such as the PKI server 7.

The encryption plug-in 77 then calculates, at S9, a message key MKᵢ for each recipient Rᵢ to form a set MK of n message keys {MKᵢ...MKᵢ...MKₙ}. In particular, for each recipient Ri the encryption plug-in calculates the corresponding message key MKᵢ by concatenating the public key PUBᵢ for the recipient Rᵢ and the main cryptographic key K_{MAIN}, and then symmetrically encrypting the resultant concatenated data. In this embodiment, the symmetric encryption is performed using the Advanced Encryption Standard (AES) algorithm. The encryption plug-in 77 then generates and sends, at S11, a server key message to the secure database server 5. The server key message conveys a message type indicator indicating that server key data for a new message is being conveyed, a message identifier M for the new message, an identifier for the sender, the set R of recipients {R₁...Rᵢ...Rₙ}, access rules for each of the recipients and a digital signature formed by asymmetrically encrypting a one-way hash of data of the server key message using the private key PRI of the sender. It will be appreciated that, in a conventional manner, the one-way hash enables the identity of the sender and integrity of the server key message to be verified.

On receiving, at S 13, the server key message, the Master_Control routine 41 of the secure database server 5 extracts, at S 15, the conveyed data and verifies the identity of the sender and the integrity of the message. The Master_Control routine 41 detects from the message type indicator that the message is conveying server key data, and in response initiates the Store_Server_Key sub-routine to store, at S17, the server key data for the message in the secure key database 37, following which the Store_Server_Key sub-routine ends, at S 19.

Returning to the sender network device, following sending of the server key message, the encryption plug-in 77 encrypts, at S21, the plaintext data P using the main cryptographic key and the AES encryption algorithm to form ciphertext data C. The encryption plug-in 77 then generates and sends, at S23, an electronic mail message to the set R of recipients {R₁...Rᵢ...Rₙ} conveying the message identifier M, the set MK of message keys {MK₁...MKᵢ...MKₙ}, the ciphertext data C and data indicating how the encryption plug-in 77 can be installed. The encryption plug-in 77 then deletes, at S25, the values of the main cryptographic key K_{MAIN} and the set IK of n intermediate keys {IK₁...IKᵢ...Ikₙ}. This deletion involves actually wiping the data values from data memory. In this embodiment, the deletion is performed using the Schneier method for data sanitisation. The processing in the sender network device then ends, at S27.

The network device for a recipient receives, at S29, the electronic mail message. Subsequently, the recipient network device receives, at S31, an input command from a user to open the electronic mail message. If the encryption plug-in 77 is not already installed into the email program 75 of the recipient network device, then the information indicating how to install the encryption plug-in 77 is presented to the user of the recipient network device. Otherwise, the encryption plug-in 77 in the recipient network device generates and sends, at S33, a server key request message to the secure database server 5. In particular, the encryption plug-in 77 extracts the message identifier M from the electronic mail message, and generates a server key request message conveying a message type indicator indicating that a server key is requested, the identity of the recipient Ri, and a digital signature. The encryption plug-in 77 in the recipient network device then waits, at S35, a reply from the secure database server 5.

On receiving, at S37, the server key request message, the Master_Control routine 41 of the secure database server 5 extracts the conveyed data and uses the digital signature to verify, at S39, the identity of the recipient and the integrity of the message. The Master_Control routine 41 detects from the message type indicator that the message is requesting server key data, and initiates the Supply_Server_Key sub-routine 45.

The Supply_Server_Key sub-routine extracts, at S41, the message identifier M and checks that the recipient Rᵢ is one of the recipients for that message and that the access rules are not violated. Assuming all is well, the Supply_Server_Key sub-routine generates and sends, at S43, a reply message conveying the server key SKᵢ stored in the secure database 37 in association with the message identifier M and the recipient Rᵢ. The Supply_Server_Key sub-routine 45 then ends, at S45.

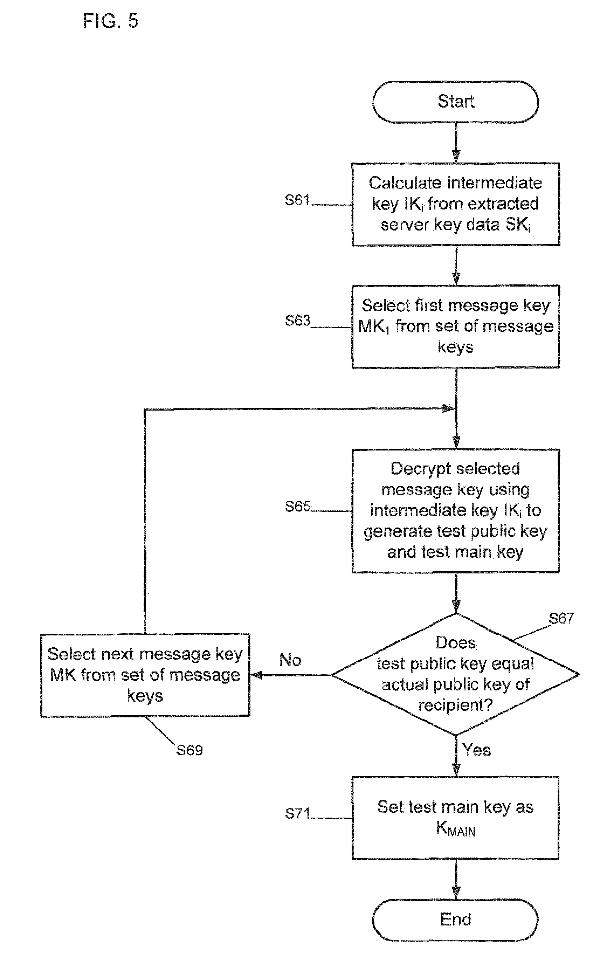

Following receipt, at S47, of the reply message from the secure database server 5, the encryption plug-in 77 of the recipient network device extracts the server key SKi. The encryption plug-in 77 then recovers, at S49, the main cryptographic key K_{MAIN} using the server key SKᵢ and the set MK of message keys {MK₁...MKᵢ...MKₙ}. The way in which the encryption plug-in 77 recovers the main cryptographic key K_{MAIN} will now be described in detail with reference to Figure 5.

Firstly, the encryption plug-in calculates, at S61, the intermediate key IKᵢ from the server key SKᵢ by asymmetrically decrypting the server key SKᵢ using the private key PRIᵢ for the recipient Rᵢ. It will be appreciated that the private key PRIᵢ is confidential to the recipient Rᵢ, and accordingly, provided the private key PRIᵢ is kept secure, nobody but the recipient Rᵢ can recover the intermediate key IKᵢ. The encryption plug-in 77 then selects, at S63, the first of the set MK of message keys {MK₁...MKᵢ...MKₙ} and attempts to decrypt, at S65, the selected message key MKₛ using the AES encryption algorithm and the recovered intermediate key IKᵢ to generate a test public key PUB_{T} and a test main cryptographic key K_{T}. If the decryption attempt fails to complete, then the encryption plug-in 77 selects, at S69, the next message key of the set MK of message keys {MK₁...MKᵢ...MKₙ} for decryption and testing.

If the decryption attempt completes and a test public key PUB_{T} and a test main cryptographic key K_{T} is generated, then in order to check whether the selected message key MKₛ is the message key MKᵢ for the recipient Rᵢ, the encryption plug-in 77 tests, at S67, whether the test public key PUB_{T} equals the actual public key PUBᵢ for the recipient Rᵢ. If the test public key PUB_{T} does not equal the actual public key PUBᵢ, then the encryption plug-in 77 discards the test public key PUB_{T} and the test main cryptographic key K_{T} and selects, at S69, the next message key of the set MK of message keys {MK₁...MKᵢ...MKₙ} for decryption and testing. If the test public key PUB_{T} does equal the actual public key PUBᵢ, then the encryption plug-in 77 sets, at S71, the test main cryptographic key K_{T} equals the main cryptographic key K_{MAIN}.

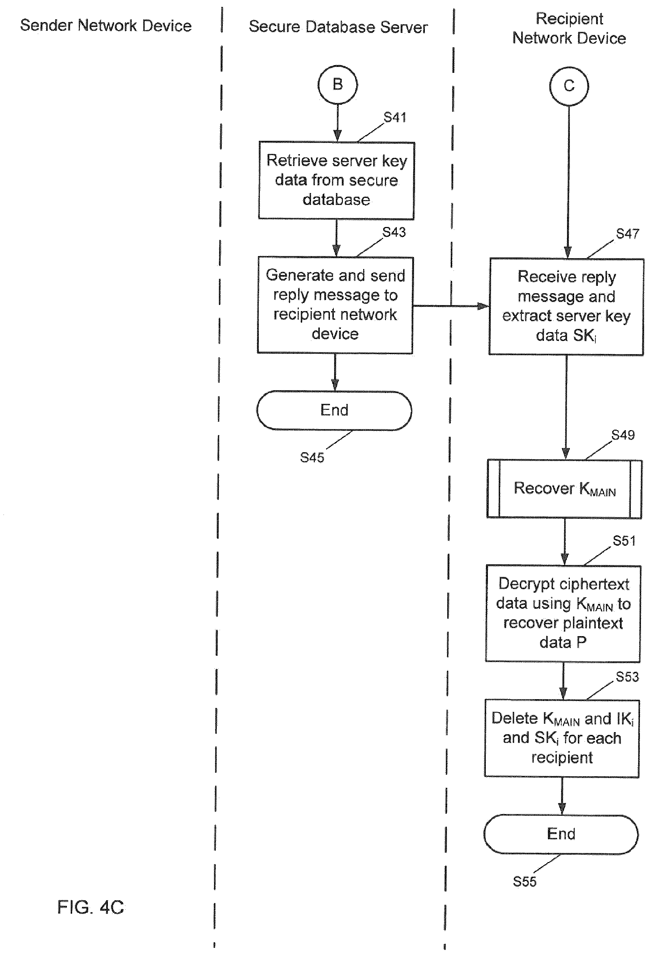

Returning to Figure 4C, after recovering the main cryptographic key K_{MAIN}, the encryption plug-in 77 decrypts, at S51, the ciphertext message C using the AES encryption algorithm and the main cryptographic key K_{MAIN} to recover the plaintext message P for presentation to the user of the recipient network device. The encryption plug-in 77 then deletes, at S53, the values for K_{MAIN}, IKᵢ and SKᵢ stored on the recipient network device using the Schneier method, and the process ends at S55. Again, this deletion involves actually wiping the data values from data memory.

### Removing Recipient

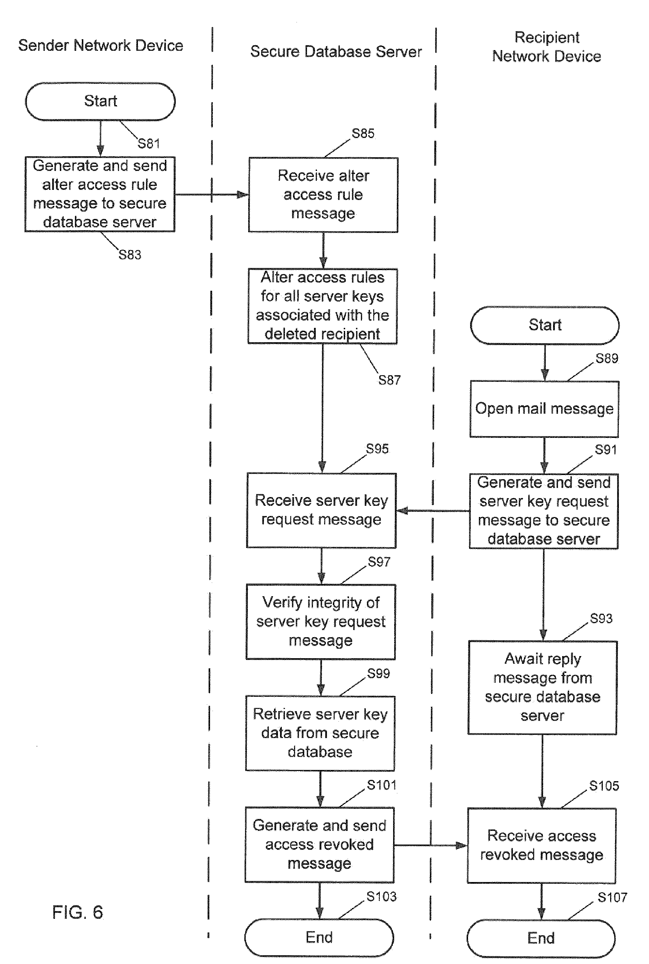

As described above, in order to be able to decrypt a ciphertext message C, a recipient Rᵢ must retrieve a server key SKᵢ from the secure database server 5. Access to the server key SKᵢ is controlled by access rules. A novel feature of the present invention is that the sender of an encrypted electronic mail message is able to modify the access rules anytime after the encrypted electronic mail message has been sent. By way of example, the effective deletion of a recipient from the secure database server will now be described with reference to Figure 6. This could be useful, for example, when an employee leaves a company and the company wishes to ensure that the employee is no longer able to open encrypted emails containing confidential company data.

The process starts, at S81, by the user of the sender network device selecting, using an option of the email program 75 provided by the encryption plug-in 77, a recipient Rᵢ for deletion. The encryption plug-in 77 then generates and sends, at S83, an alter access rule message to the secure database server 5. The alter access rule message conveys a message type indicator indicating that an altered access rule is being conveyed, an identifier for the sender, an identifier for the recipient Rᵢ, the new access rule for the recipient Rᵢ (i.e. that a request for a server key SKᵢ is to be denied) and a digital signature.

Following receipt, at S85, of the alter access rule message, the Master_Control routine 41 of the secure database server 5 extracts the conveyed data and verifies the identity of the sender and the integrity of the message. The Master_Control routine 41 detects from the message type indicator that the message is conveying a new access rule, and in response initiates the Alter_Access_Rule sub-routine 47 to alter, at S87, each access rule for the recipient Rᵢ to deny provision of the corresponding server key SKᵢ.

If the deleted recipient then opens, at S89, an encrypted mail message, then the encryption plug-in generates and sends, at S91, a server key request in the manner described above and awaits, at S93, a reply message from the secure database server 5. On receiving, at S95, the server key request message, the Master_Control routine 41 of the secure database server 5 extracts the conveyed data and uses the digital signature to verify, at S97, the identity of the recipient and the integrity of the message. The Master_Control routine 41 detects from the message type indicator that the message is requesting server key data, and initiates the Supply_Server_Key sub-routine 45.

The Supply_Server_Key sub-routine extracts the message identifier M, retrieves, at S99, the server key data in the secure database 37 and checks that the recipient Rᵢ is one of the recipients for that message and that the access rules are not violated. On identifying that the access rule is violated, the Supply_Server_Key sub-routine 45 generates and sends, at S101, an access revoked message to the recipient network device, and then the Supply_Server_Key sub-routine 45 ends, at S103. Following receipt, at S105, of the access revoked message, the process ends with an access revoked message being displayed to the user of the recipient network device.

### Modifications and Further Embodiments

As discussed above, various access rules can be set up to determine whether or not a server key SKᵢ is supplied to a recipient Rᵢ. These access rules can include, for example, one or more of:
- limit decryption to specific Internet Protocol (IP) addresses, IP address ranges, domains, networks, network types (for example wireless LAN, wired LAN, 3G, 4G, dial-up) and/or subnets
- limit decryption to a specific device class (for example desktop computer, laptop computer, Smartphone, tablet computer) or group of device classes
- limit decryption to specific operating systems and/or operating system versions
- limit decryption to specific login usernames, email addresses and/or other personal information;
- limit decryption to specific geographic areas (including continents, countries, time zones and/or cities)
- limit decryption to specific time periods (including a fixed period in time or recurring daily, weekly, monthly or yearly periods)
- limit decryption to specific hardware devices, defined by specific serial numbers in the system (including network card serial number, hard disk serial number, processor/chipset serial numbers, SIM card number)

An advantageous feature of the illustrated embodiment is that the access rules can be changed by the sender after they have been stored in the secure database 37. In addition to being able to amend the access rule to block access by a user to a particular email, the access rules could be changed to vary the criteria under which a server key is supplied. In addition, the access rule can be varied to block all access to a particular user to any server key. This would be useful if, for example, the private key PRI for that user became compromised.

In an embodiment, the alter access rule message can include an instruction to delete encrypted electronic mail message data for one or more email stored locally by a recipient. This deletion involves actually wiping the data values from data memory. Following the implementation of such an access rule message, when the recipient next attempts to access a server key, the reply message from the secure database server contains an instruction to the encryption plug-in 77 to delete encrypted electronic mail message data stored locally by the recipient. In response, the encryption plug-in 77 deleted the local encrypted electronic mail message data using, for example, the Schneier method. This can take some time, and therefore the encryption plug-in 77 can display a message to the recipient indicating that the reply message from the secure database server was still being awaited to discourage the recipient taking action which may disrupt the deletion process.

While the Schneier method for wiping data from data memory has been referred to above, it will be appreciated that other techniques for wiping data from data memory exist.

In the illustrated embodiment, the message key MKi for recipient Ri includes the public key PUBᵢ for the recipient Rᵢ in addition to the main cryptographic key K_{MAIN}. The public key PUBᵢ acts as an identifier for the recipient Rᵢ by which the recipient Rᵢ can identify the correct message key MKᵢ corresponding to the recipient Rᵢ. Other identifiers for the recipient Rᵢ could be used in place of, or in addition to, the public key PUBᵢ, for example the email address of the recipient Rᵢ.

It will be appreciated that instead of a set R of recipients {R₁...Rᵢ...Rₙ}, there could be a single intended recipient. Further, the sender of the electronic mail message could be one, or the only, recipient.

In the illustrated embodiment, the program code for implementing the invention is introduced into a conventional email program via an encryption plug-in. Alternatively, the present invention can be implemented by novel program code running directly on the operating system itself rather than as a plug-in to a conventional email system. In such an alternative embodiment, the novel program code registers with the operating system as a producer and a consumer of a particular file type (for example, identified by the filename extension .cs1) which contains the ciphertext and the set MK of message keys {MK₁...MKᵢ...MKₙ}. Consequently, when the operating system receives notification that a file of that file type is to be opened, the operating system will initiate the novel program code to process the file. The novel program code can then recover the ciphertext and the set MK of message keys {MK₁...MKᵢ...MKₙ} and proceed as described above for the illustrated embodiment in order to recover the main cryptographic key K_{MAIN} and decrypt the ciphertext. The novel program code can likewise process plaintext to generate a file of the particular file type containing a corresponding ciphertext and set MK of message keys {MK₁...MKᵢ...MKₙ} for the ciphertext, and send encrypted intermediate key data in conjunction with an access rule for controlling access to the encrypted intermediate key to a server.

Although the illustrated embodiment is described with relation to encrypted electronic mail messages, the present invention has applicability whenever electronic data needs protection. For example, in an alternative embodiment the ciphertext data is stored in conjunction with the set MK of message keys {MK₁...MKᵢ...MKₙ} for a set of n permitted readers in a network device in the form of a file with a filename extension (e.g..cs1) indicating that a decryption program which performs the decryption functions of the encryption plug-in 77 is required to open the file. The network device may be, for example, a network storage device such as a Network-Attached Storage (NAS) drive. When a user attempts to open the file, the operating system of the network device of the user initiates the decryption program, which then proceeds to carry out analogous decryption steps to those described above in relation to encrypted electronic mail messages. In the same way, the present invention could be used to protect data stored on a removable data storage device such as a USB drive.

In the illustrated embodiment, the secure database server 5 is interconnected with the other network devices using the Internet. It will be appreciated that the invention could be implemented in other network configurations. For example, the secure database server 5 and the other network devices could all be connected to a LAN associated with a corporation.

In the illustrated embodiment, the AES encryption algorithm is used for symmetric encryption and the RSA algorithm is used for asymmetric encryption. It will be appreciated that other encryption algorithms could be used. For example, 3DES is an example of an alternative symmetric encryption algorithm and the Boneh-Franklin identity-based encryption algorithm is an example of an alternative asymmetric encryption algorithm. It will also be appreciated that the invention can be used with cryptographic keys of various different lengths. For example, the main cryptographic key could be 128 bits.

The embodiment described with reference to the drawings comprises computer apparatus and involves processes performed in the computer apparatus. The invention also extends to computer programs, particularly computer programs on or in a carrier, adapted for putting the invention into practice. The program may be in the form of source code, object code, a code intermediate to source code and object code such as in partially compiled form, or in any other form suitable for using in the implementation of the processes according to the invention.

The carrier may be any entity or device capable of carrying the program. For example, the carrier may comprise a storage medium, such as a ROM, for example a CD-ROM or a semiconductor ROM, or a magnetic recording medium, for example a floppy disc or a hard disc, or an optical recording medium. Further, the carrier may be a transmissible carrier such as an electronic or optical signal which may be conveyed via electrical or optical cable or by radio or other means.

The carrier may be an integrated circuit in which the program is embedded, the integrated circuit being adapted for performing, or for use in the performance of, the relevant processes.

Although in the described embodiment the invention is implemented by software, it will be appreciated that alternatively the invention could be implemented by hardware devices or a combination of hardware devices and software.

## Claims

1. A method of encrypting electronic data, the method comprising:
symmetrically encrypting plaintext data using a main encryption key to generate ciphertext data;
for each intended reader of the electronic message, encrypting the main encryption key in combination with identity data representative of the reader using an intermediate encryption key for the reader to generate encrypted key data;
for each intended reader, asymmetrically encrypting the intermediate encryption key for the reader using a public key for the reader as the cryptographic key for a PKI encryption system to form encrypted intermediate key data; and
sending the encrypted intermediate key data in conjunction with an access rule for controlling access to the encrypted intermediate key to a server for access by each intended reader.

2. A method according to claim 1, further comprising sending an electronic mail message to each intended reader, the electronic mail message conveying the ciphertext data and the encrypted key data.

3. A method according to claim 1, further comprising storing the ciphertext data and the encrypted key data.

4. A method according to claim 3, wherein said storing comprises storing the ciphertext data and the encrypted key data in a network storage device remote from the server.

5. A method according to claim 3, wherein said storing comprises storing the ciphertext data and the encrypted key data in a removable data storage device.

6. A method according to any preceding claim, further comprising generating a message conveying an access rule change and sending the access rule change message to the server.

7. A method according to claim 6, wherein said access rule change comprises one or more of: limiting access to encrypted intermediate key data stored in the server in respect of specific ciphertext data; limiting access to intermediate key data stored in the server in respect of a specific reader; and a command to initiate deletion of stored ciphertext data.

8. A method of decrypting ciphertext data, ciphertext data stored in association with encrypted key data for each intended reader of the plaintext data corresponding to the ciphertext data, the method comprising:
retrieving encrypted intermediate key data corresponding to the reader from a server;
asymmetrically decrypting the retrieved encrypted intermediate key data using a private key for the reader as the cryptographic key for a PKI encryption algorithm to recover an intermediate key;
decrypting the encrypted key data using the recovered intermediate key to identify identity data representative of the recipient and a corresponding main message encryption key; and
decrypting the encrypted message data using said corresponding message encryption key as the cryptographic key for a symmetric encryption algorithm.

9. A method according to claim 8, further comprising receiving the ciphertext data and the encrypted key data in an electronic mail message.

10. A method according to claim 8 or 9, wherein retrieving the encrypted intermediate key data comprises:
sending a request for the encrypted intermediate key data to the server; and
receiving a reply from the server,
wherein in response to the reply from the server conveying an instruction to delete the ciphertext data, the method further comprises deleting locally stored copies of the cipher text.

11. A method of operation of a network server, the method comprising:
receiving a message conveying encrypted intermediate key data associated with a ciphertext for each intended reader of the ciphertext and an associated access rule the encrypted intermediate key data for each intended reader;
storing the encrypted intermediate key data in association with each corresponding intended reader in a database;
receiving a request for encrypted intermediate key data for an intended reader of a ciphertext;
checking compliance with the access rule; and
in response to compliance to the access rule, sending a message conveying the encrypted intermediate key data for the intended reader.

12. A method according to claim 11, further comprising:
receiving a message conveying an access rule change; and
implementing the access rule change in the database.

13. A method according to claim 12, wherein said access rule change comprises one or more of: limiting access to encrypted intermediate key data stored in the server in respect of specific ciphertext data; limiting access to intermediate key data stored in the server in respect of a specific reader; and a command to initiate deletion of stored ciphertext data.

14. Apparatus for implementing a method as claimed in any preceding claim.

15. A computer program product having computer implementable instructions for carrying out a method as claimed in any of claims 1 to 13.
